(19) 

**Europäisches Patentamt**
**European Patent Office**
**Office européen des brevets**

(11) **EP 4 626 015 A1**

(12) **EUROPEAN PATENT APPLICATION**

(43) Date of publication:
**01.10.2025 Bulletin 2025/40**

(21) Application number: **25167033.7**

(22) Date of filing: **28.03.2025**

(51) International Patent Classification (IPC):
***H04N 25/677*** *(2023.01)*

(52) Cooperative Patent Classification (CPC):
**H04N 25/677**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **28.03.2024 IL 31182424**

(71) Applicant: **Semiconductor Devices Ltd.**
**D.N. Misgav, 2017900 (IL)**

(72) Inventors:
• **BAR, Doron E.**
  **3457402 Haifa (IL)**
• **SHUNEM, Edan**
  **Tirat Carmel (IL)**
• **Avraham, EPSTEIN**
  **Shekhanya (IL)**

(74) Representative: **Zacco GmbH**
  **Bayerstrasse 83**
  **80335 München (DE)**

(54) **NON-UNIFORMITY CORRECTION FOR INFRARED IMAGING**

(57) An infrared image processing method including: receiving an image frame including a measurement array **X** of pixel values from a detector array of an infrared camera; calculating, from **the** measurement array: a row average vector **r** where calculating each element $r_i$ of **the** row average vector includes averaging corresponding elements of rows of the measurement pixel array; a column average vector **c** where calculating each element $c_j$ of the column average vector includes averaging corresponding elements of columns of the measurement pixel array; generating a correction array **D** by, for each element $D_{ij}$ of the correction array, summing a corresponding row average vector element $r_i$ and a corresponding column average vector element $c_j$; and applying the measurement array **X** with the correction array **D** to provide a corrected measurement array.

**EP 4 626 015 A1**

**Description**

**TECHNOLOGICAL FIELD**

The present disclosure, in some embodiments, thereof, relates to compensation for out-of-field radiation sensing by a detector array and, more particularly, but not exclusively, to compensation for out-of-field radiation sensing associated with camera element/s for an infrared camera.

**BACKGROUND ART**

Background art includes US Patent No 9,491,376 which discloses *"Various techniques are provided to perform flat field correction for infrared cameras. In one example, a method of calibrating an infrared camera includes calibrating a focal plane array (FPA) of the infrared camera to an external scene to determine a set of flat field correction values associated with a first optical path from the external scene to the FPA. The method also includes estimating a temperature difference between the FPA and a component of the infrared camera that is in proximity to the first optical path. The method also includes determining supplemental flat field correction values based on, at least in part, the first set of flat field correction values, where the supplemental flat field correction values are adjusted based on the estimated temperature difference before being applied to thermal image data obtained with the infrared camera. The method also includes storing the supplemental flat field correction values".*

Additional background art includes US Patent No. US 8,373,757, US Patent No. 9,723,227, US Patent No. 10,986,288, US Patent No. 10,393,575, US Patent No. 9,930,324, US Patent Application Publication No. US 2020/0154063, and Gershon, G., et al. "LOW SWaP MWIR DETECTOR AND VIDEO CORE." www.scd.co.il .

Acknowledgement of the above references herein is not to be inferred as meaning that these are in any way relevant to the patentability of the presently disclosed subject matter.

**GENERAL DESCRIPTION**

Following is a non-exclusive list of some exemplary embodiments of the disclosure. The present disclosure also includes embodiments which include fewer than all the features in an example and embodiments using features from multiple examples, even if not listed below.

Example 1. An infrared image processing method comprising:

receiving an image frame comprising a measurement array X of pixel values from a detector array of an infrared camera;

calculating, from said measurement array:

a row average vector r where calculating each element $r_i$ of said row average vector comprises averaging corresponding elements of rows of said measurement pixel array;

a column average vector **c** where calculating each element $c_j$ of said column average vector comprises averaging corresponding elements of columns of said measurement pixel array;

generating a correction array **D** by, for each element $D_{ij}$ of said correction array, summing a corresponding row average vector element $r_i$ and a corresponding column average vector element $c_j$; and

applying said measurement array **X** with said correction array **D** to provide a corrected measurement array.

Example 2. The method according to Example 1, wherein said measurement pixel array **X** is an m x n array; and wherein generating said correction array **D** comprises calculating each element $D_{ij}$ of the correction array **D** according to the relationship:

$$D_{ij} = r_i + c_j$$

Example 3. The method according to any one of Examples 1-2, wherein said generating comprises adjusting one or both of said row average vector and said column average vector.

Example 4. The method according to Example 3, comprising:

differentiating one or more average vector selected from said row average vector and said column average vector to provide one or more corresponding differentiated average vector;

2

determining one or more best fit line to said one or more differentiated average vector; and

integrating said one or more best fit line to produce one or more best fit parabolic functions corresponding to said one or more average vector selected from said row average vector and said column average vector

wherein said adjusting comprises using said one or more best fit parabolic functions.

Example 5. The method according to Example 4, wherein said differentiating, said determining, and said integrating is for each of said row and said column average vectors; and

wherein said adjusting comprises using a row best fit parabolic function **fr** to smooth said row average vector and a column best fit parabolic function **fc** to smooth said column average vector.

Example 6. The method according to any one of Examples 4-5, wherein one or more of:

said adjusting said row average vector comprises replacing at least one element of said row average vector with a value of a corresponding element of said row best fit parabolic function; and

said adjusting said column average vector comprises replacing at least one element of said column average vector with a value of a corresponding element of said column best fit parabolic function.

Example 7. The method according to Example 5, wherein said adjusting comprises replacing one or both of said row and said column average vectors with said corresponding best fit opening parabolic function.

Example 8. The method according to any one of Examples 3-7, wherein said adjusting comprises identifying outlier elements in one or both of said row average vector and said column average vector.

Example 9. The method according to Example 8, wherein, for one or both of said row and said column average vectors, said identifying comprises identifying elements of a corresponding double differentiated average vector element which are outside of a threshold value and/or range.

Example 10. The method according to any one of Examples 8-9, wherein, for one or both of said row and said column average vectors, said identifying comprises designating a proportion of elements having the most extreme values as outlier elements.

Example 11. The method according to any one of Examples 8-10, wherein, for one or both of said row and said column average vectors, said identifying outlier elements comprises designating those average vector elements varying, in a differential domain, by over a threshold value from a corresponding differential domain opening parabolic function.

Example 12. The method according to any one of Examples 8-11, comprising adjusting said outlier elements.

Example 13. The method according to Example 12, wherein said adjusting comprises setting values of said outlier elements to zero.

Example 14. The method according to any one of Examples 12-13, wherein said adjusting comprising replacing said outlier elements values with values produced by interpolation between non-outlier elements of the corresponding average vector in the differential domain.

Example 15. The method according to Example 14, wherein said interpolation is linear interpolation.

Example 16. The method according to any one of Examples 14-15, wherein said adjusting comprises replacing said outlier elements with corresponding values of the corresponding opening parabolic function.

Example 17. The method according to Example 16, wherein said adjusting comprises replacing said outlier elements with a weighted sum of a corresponding opening parabolic function value and a value determined using interpolation between the non-outlier elements of said average vector in a differential domain.

Example 18. The method according to any one of Examples 1-17, wherein said calculating comprises rotating said measurement array of pixel values, said row average vector and said column average vector being averages of elements of said measurement array in two perpendicular directions across said measurement array, the directions associated with an angle of said rotating.

Example 19. The method according to any one of Examples 2-18, wherein said calculating comprises calculating elements $r_i$ of said row average vector r according to:

$$r_i = \frac{\sum_{a=1}^{n}(x_{ia})}{n}.$$

Example 20. The method according to Example 19, wherein said calculating comprises calculating elements $c_j$ of said column average vector c according to:

$$c_j = \frac{\sum_{b=1}^{m} (x_{bj})}{m}.$$

Example 21. The method according to any one of Examples 3-18, wherein said adjusting produces an adjusted row vector **r'** and an adjusted column vector **c'**;

wherein said generating said correction array comprises generating a first correction array **D1**, using said adjusted column **c'** and row **r'** vectors, wherein said generating comprises calculating each element $D1_{nm}$ of the array **D1** according to the relationship:

$$D1_{ij} = c'_j + r'_i$$

Example 22. The method according to Example 21, wherein said correction array consists of said first correction array:

$$D = D1.$$

Example 23. The method according to Example 21, wherein said generating said correction array comprises generating a second correction array **D2** using said row and said column best fit opening parabolic functions **fr**, **fc**, and calculating each element $D2_{nm}$ of the array **D2** according to the relationship:

$$D2_{ij} = fc_j + fr_i$$

Example 24. The method according to Example 23, wherein said correction array consists of said second correction array:

$$D = D2.$$

Example 25. The method according to Example 23, wherein said generating said correction array comprises using a weighted combination of said first correction array **D1** and said second correction array **D2**.

Example 26. The method according to Example 24, wherein said generating said correction array **D** is according to the relationship:

$$D = aD1 + bD2$$

where *a* and *b* are weights.

Example 27. The method according to any one of Examples 1-26, comprising verifying said correction array.

Example 28. The method according to Example 27, wherein said verifying comprises verifying curvature across the correction array in one or more direction.

Example 29. The method according to any one of Examples 27-28, wherein said verifying comprises verifying a difference between curvature of said correction array in the row direction and the column direction.

Example 30. The method according to Example 29, wherein said verifying comprises determining a curvature score.

Example 31. The method according to Example 30, wherein said verifying comprises determining a difference in curvature score.

Example 32. The method according to anyone of Examples 27-31, wherein said verifying comprises comparing said correction array with one or more previous correction arrays received.

Example 33. The method according to Example 32, wherein said verifying comprises determining a consistency score for difference between said correction array and said one or more previous correction arrays, said consistency score based on consistency of polarity of said correction array.

Example 34. The method according to Example 33, wherein said verifying comprises generating and verifying a combined score using one or more of a curvature score, a difference in curvatures score and said consistency score.

Example 35. The method according to any one of Examples 1-34, wherein said applying comprising subtracting said correction array from said measurement array to provide a corrected measurement array.

Example 36. The method according to Example 35, comprising attenuating said correction array by an attenuation factor, prior to said subtracting.

Example 37. The method according to any one of Examples 35-36, comprising outputting said corrected measurement array.

Example 38. The method according to any one of Examples 1-37, wherein said receiving comprises receiving more than one measurement array and averaging said more than one measurement array to provide said measurement array **X**.

Example 39. The method according to any one of Examples 1-38, wherein said applying comprises applying said correction array to a plurality of sequentially received measurement arrays.

Example 40. The method according to Example 39, comprising re-determining said measurement array to provide a re-determined array and applying said re-determined array to subsequently received measurement arrays.

Example 41. A detector system comprising:

a detector array comprising a plurality of detectors, which detector array configured to provide image frames each image frame including a measurement array **X** of pixel values, each pixel value provided by a detector of said plurality of detectors;
a processor configured to:

receive said measurement array from said detector array;
calculate, from said measurement array:

a row average vector r where, for each element of said row average vector, averaging corresponding elements of rows of said measurement pixel array; and
a column average vector c where, for each element of said column average vector, averaging corresponding elements of columns of said measurement pixel array;

generate a correction array **D** by, for each element of said correction array, summing a corresponding row average vector element and a corresponding column average vector element.

Example 42. The detector system according to Example 41, comprising a memory; wherein said processor is configured to compute and save said correction array in said memory.

Example 43. The detector system according to any one of Examples 41-42, wherein said processor is configured to correct said measurement array, using said correction array to provide a corrected measurement array.

Example 44. The detector system according to Example 43, wherein said processor is configured to subtract said correction array from said measurement array to provide said corrected measurement array.

Example 45. The detector system according to any one of Examples 42-44, comprising a display configured to receive said corrected measurement array from said processor and display said corrected measurement array.

Example 46. The detector system according to any one of Examples 41-45, wherein said plurality of detectors are configured to detect infrared light.

Example 47. An infrared image processing method comprising:

receiving an image frame comprising a measurement array of pixel values from a detector array of an infrared camera;
calculating a first average vector and a second average vector, as averages of elements of said measurement array in two perpendicular directions across said measurement array;
determining, for said first average vector a first best fit opening parabolic function and, for said second average vector a second best fit opening parabolic function;
generating a correction array by:

adjusting each said average vector using an associated best fit opening parabolic function to provide an adjusted first average vector and an adjusted second average vector, where each element of said correction array is a sum of an associated adjusted second average vector element and an associated adjusted first average vector element;

**or**

for each element of said correction array, summing an associated first best fit opening parabolic function element and a second associated best fit opening parabolic function element.

Unless otherwise defined, all technical and/or scientific terms used within this document have meaning as commonly understood by one of ordinary skill in the art/s to which the present disclosure pertains. Methods and/or materials similar or equivalent to those described herein can be used in the practice and/or testing of embodiments of the present disclosure, and exemplary methods and/or materials are described below. Regarding exemplary embodiments described below, the materials, methods, and examples are illustrative and are not intended to be necessarily limiting.

Some embodiments of the present disclosure are embodied as a system, method, or computer program product. For example, some embodiments of the present disclosure may take the form of an entirely hardware embodiment, an entirely software embodiment (including firmware, resident software, micro code, etc.) or an embodiment combining software and hardware aspects that may all generally be referred to herein as a "circuit," "module" and/or "system."

Implementation of the method and/or system of some embodiments of the present disclosure can involve performing and/or completing selected tasks manually, automatically, or a combination thereof. According to actual instrumentation and/or equipment of some embodiments of the method and/or system of the present disclosure, several selected tasks could be implemented by hardware, by software or by firmware and/or by a combination thereof, e.g., using an operating system.

For example, hardware for performing selected tasks according to some embodiments of the present disclosure could be implemented as a chip or a circuit. As software, selected tasks according to some embodiments of the present disclosure could be implemented as a plurality of software instructions being executed by a computational device e.g., using any suitable operating system.

In some embodiments, one or more tasks according to some exemplary embodiments of method and/or system as described herein are performed by a data processor, such as a computing platform for executing a plurality of instructions. Optionally, the data processor includes a volatile memory for storing instructions and/or data and/or a non-volatile storage e.g., for storing instructions and/or data. Optionally, a network connection is provided as well. User interface/s e.g., display/s and/or user input device/s are optionally provided.

Some embodiments of the present disclosure may be described below with reference to flowchart illustrations and/or block diagrams. For example illustrating exemplary methods and/or apparatus (systems) and/or and computer program products according to embodiments of the present disclosure. It will be understood that each step of the flowchart illustrations and/or block of the block diagrams, and/or combinations of steps in the flowchart illustrations and/or blocks in the block diagrams, can be implemented by computer program instructions. These computer program instructions may be provided to a processor of a general-purpose computer, special purpose computer, or other programmable data processing apparatus to produce a machine, such that the instructions, which execute via the processor of the computer or other programmable data processing apparatus, create means for implementing the functions/acts specified in the flowchart steps and/or block diagram block or blocks.

These computer program instructions may also be stored in a computer readable medium that can direct a computer (e.g., in a memory, local and/or hosted at the cloud), other programmable data processing apparatus, or other devices to function in a particular manner, such that the instructions stored in the computer readable medium can be used to produce an article of manufacture including instructions which implement the function/act specified in the flowchart and/or block diagram block or blocks.

The computer program instructions may also be run by one or more computational device to cause a series of operational steps to be performed e.g., on the computational device, other programmable apparatus and/or other devices to produce a computer implemented process such that the instructions which execute provide processes for implementing the functions/acts specified in the flowchart and/or block diagram block or blocks.

Some of the methods described herein are generally designed only for use by a computer, and may not be feasible and/or practical for performing purely manually, by a human expert. A human expert who wanted to manually perform similar tasks, might be expected to use different methods, e.g., making use of expert knowledge and/or the pattern recognition capabilities of the human brain, potentially more efficient than manually going through the steps of the methods described herein.

**BRIEF DESCRIPTION OF THE DRAWINGS**

In order to better understand the subject matter that is disclosed herein and to exemplify how it may be carried out in practice, embodiments will now be described, by way of non-limiting example only, with reference to the accompanying drawings, in which:

FIG. 1 is a simplified schematic of a camera, according to some embodiments of the disclosure;
FIG. 2 is a flow chart of a method of image processing, according to some embodiments of the disclosure;
FIG. 3A is an illustration of an exemplary measurement pixel array, according to some embodiments of the disclosure;
FIG. 3B is an illustration of an exemplary corrected measurement pixel array, according to some embodiments of the disclosure;
FIG. 3C is an illustration of an exemplary correction array, according to some embodiments of the disclosure;
FIG. 4 is a plot of exemplary data, according to some embodiments of the disclosure;
FIG. 5 is a flow chart of an image processing method, according to some embodiments of the disclosure;

FIG. 6 is a flow chart of a processing method, according to some embodiments of the disclosure;

FIG. 7A is an illustration of an exemplary measurement pixel array, according to some embodiments of the disclosure;

FIGs. 7B-C are plots of exemplary average vectors, according to some embodiments of the disclosure;

FIG. 7D is an illustration of an exemplary correction array, according to some embodiments of the disclosure; and

FIG. 8 is a plot of a differentiated average vector, a best-fit line, and a smoothed average vector, according to some embodiments of the disclosure.

## DETAILED DESCRIPTION OF EMBODIMENTS

The present disclosure, in some embodiments, thereof, relates to compensation for out-of-field radiation sensing by a detector array and, more particularly, but not exclusively, to compensation for out-of-field radiation sensing associated with camera element/s for an infrared camera.

**Overview**

A broad aspect of some embodiments of the disclosure relates to using image/s (also herein termed "measurement array/s") acquired by an infrared detector array (also herein termed "detector" and/or "array") of an infrared camera to generate a compensation array for correction of acquired images. Where, in some embodiments, compensation is of out-of-field radiation, the source/s of which are outside of a field of view of the camera. The out-of-field radiation may be slowly varying e.g., with respect to the image acquisition rate and/or detection noise.

In some embodiments, the out-of-field radiation is associated with element/s of the camera itself, for example, associated with temperature of and/or temperature differences between structural and/or optical elements of the infrared camera. For example, in some embodiments, the out-of-field radiation is assumed to be dome shaped, the shape, e.g., corresponding to heat emitted from portions of the camera encircling the aperture e.g., camera walls and/or optical elements of the camera.

In some embodiments, the camera includes an internal shutter (e.g., and the camera may lack a shutter at the camera aperture). Where, when closed, the internal shutter blocks infrared radiation from reaching the detector. For example, infrared radiation from outside the camera and/or outside the detector e.g., including a portion of radiation from inside the camera. Image/s acquired while the shutter is closed may be used to compensate for, for example, detection differences in between individual detector pixels of the detector array. In some embodiments, closing of the internal shutter, however, also blocks out-of-field radiation from arriving at the detector array meaning, for example, that images acquired with the shutter closed do not measure the out-of-field radiation.

A potential benefit of using acquired image/s to generate a compensation array is that operation of the camera is not disturbed (e.g., a shutter may not be employed and/or imaging may not need to cease during the correction and/or focus may remain the same) during generation of the compensation array.

A potential benefit of using acquired image/s to generate a compensation array is that knowledge of temperature condition/s of camera component/s and/or outside the camera is not required to generate the compensation array.

An aspect of some embodiments of the disclosure relates to generating an out-of-field radiation compensation array using averages of pixel values across a measurement array. In some embodiments, averaging of measurement array pixel values is in one or more direction across the measurement array (e.g., to "average out" the real image signal from the out-of-field radiation signal). In an exemplary embodiment two averages are taken in two perpendicular directions across the measurement array (e.g., a row average vector and a column average vector). In some embodiments, the compensation array is generated where each element of the compensation array is a sum of an associated column average vector element and an associated row average vector element. Although description in this document is generally with respect to two perpendicular average vectors, it should be understood that, in some embodiments, a single vector is used. For example, where the row average vector is used only, the compensation array, in some embodiments, is generated as each column of the array being the row average vector.

Although the average vectors may be determined at any angle with respect to the measurement array, for simplicity, description in this document relates to row and column average vectors. Calculations using different angles between the average vectors and the measurement array may be performed according to the description, but where the measurement array is first rotated by the desired angle.

In some embodiments, compensation is of out-of-field radiation having a shape which is separable in two directions, e.g., a dome shape. Although description within this document is with respect to dome shaped out-of-field radiation, it should be understood that other out-of-field radiation shapes e.g., including separable out-of-field radiation shapes may be compensated using method/s described herein.

In some embodiments, e.g., prior to using an average vector to generate the compensation array, the average vector is adjusted (e.g., smoothed). A potential benefit being reduction of effect of the image signal on the average vector/s. Where two (e.g., perpendicular) average vectors are used to generate the compensation array, one or both of the average vectors may be smoothed.

In some embodiments, the adjusting/smoothing includes removing outlier value/s from the average vector e.g., by removing or attenuating peaks in single and/or double differentials of the average vector/s. In some embodiments, alternatively or additionally, smoothing includes low-pass filtering.

In some embodiments, smoothing of the average vector/s is by using expected feature/s of the out-of-field radiation e.g., by comparison of and/or fitting of the average array to a function describing the out-of-field radiation. In some embodiments, the out-of-field radiation is assumed to be parabolic in one or more direction, for example, dome shaped, where one or both of the average vectors are compared to and/or fitted to parabolic function/s.

In some embodiments, fitting includes generating the parabolic function/s using the average vectors e.g., a row parabolic function corresponding to the row average vector and/or a column parabolic function corresponding to the column average vector. **In an** exemplary embodiment, a corresponding parabolic function to an average vector is determined as a best fit line to the differentiated average vector.

In some embodiments, the parabolic functions, along with the average vectors are used to generate the compensation matrix. Where, in some embodiments, the parabolic functions are used to identify and adjust outlier values in the average vectors e.g., the outlier values associated with dark and/or light regions of the image where averaging was not sufficient to remove the image signal.

In some embodiments, outlier values are identified as those average vector values deviating from the parabolic function by over a threshold. For example, where the outlier values are those deviating from the parabolic function by over a threshold in the differential domain or the double differential domain where the parabolic function is a straight line (angled or constant respectively). In some embodiments, the threshold value/s used are constant. In some embodiments, the threshold is determined as a function of variance of the average vector. In some embodiments, the threshold is set to designate a selected percentage of the average vector values as outlier values (the number of values above the threshold value is the selected percentage of values). In some embodiments, the threshold is determined using a dynamic range of the image. In some embodiments, outlier values are removed. In some embodiments, the removed outlier values are replaced by corresponding parabolic function values. Alternatively, in some embodiments, the removed average vector values are regenerated e.g., by interpolation between remaining non-outlier average vector values. In some embodiments, both interpolation and the corresponding parabolic function values are used to replace the removed outlier values e.g., where an outlier element is replaced with a weighted sum of the corresponding parabolic function element and the corresponding element value determined using interpolation.

In some embodiments, once outlier values are removed, the parabolic functions are re-determined, using the vector from which outlier values have been removed.

In some embodiments, the parabolic functions themselves are used to generate the compensation array. Where, in some embodiments, each element of the compensation array is a sum of an associated column parabolic function element and an associated row parabolic function element.

In some embodiments, a combination of the average vectors and parabolic functions are used to generate the compensation array. For example, where in some embodiments, a weighted sum of the average vector and the parabolic function is used e.g., the weighted sum being generated for one or both of the row and column direction, where the resulting vectors are used to produce the compensation array. In some embodiments, the weighting is determined (e.g., in advance) by trial and error where different weightings are used and evaluated e.g., evaluated by measuring remaining nonuniformity of image/s after correction. In some embodiments, the weights are determined using an iterative process (e.g., trial and error) where, for example, those weights which provide high scoring of the compensation array (e.g., scoring as described elsewhere in this document) are used. In some embodiments, e.g., alternatively or additionally to using trial and error, weights are determined using temperature characteristics and/or measurements e.g., internal and/or external to the camera, and/or optical feature/s of the camera acquiring the images.

In some embodiments, once a compensation array is generated, and prior to its use (application to acquired images before their use e.g., before their display to a user), the compensation array is verified and used in image correction only if it passes the verification. In some embodiments, verification includes one or more steps directed to verifying that the compensation array has an expected shape, e.g., that it is dome shaped e.g., that curvatures of the dome shape are within expected range/s e.g., that the curvature of the dome shape is similar in two directions. In some embodiments, verification includes that the compensation array is in agreement (e.g., polarity of the dome shape is the same) with historically generated compensation arrays e.g., for the system e.g., sample compensation arrays saved in a memory. In some embodiments, a verification process includes determining a score for a plurality of verification features. Where, in some embodiments, a combined single value score is determined for the plurality of scores. In some embodiments, this single value score is used to verify if the correction array is in condition to be used in image processing. In some embodiments, an attenuation factor by which the correction array is multiplied before use is adjusted based on the score.

In some embodiments, repetition of generating the compensation array is determined based on the score, for example, where a score indicating low quality of the compensation array may trigger generation of a new array or reduce a use-time of the array before generation of a new array is required.

In some embodiments, the compensation array is verified periodically e.g., at each use, where a compensation array's score may reduce with time, the lowering score automatically triggering generation of a new array e.g., after a certain time. In some embodiments, the age of the compensation array is one contributing part to a score. In some embodiments, a single measurement array (e.g., associated with a single acquisition time period) is used. Alternatively, in some embodiments, a plurality of images are used, for example, where the measurement array used to generate a compensation array is generated using a plurality of acquired measurement arrays. For example, where a pixel value in the measurement array is determined as an average values of corresponding pixels over a plurality of measurement arrays.

In some embodiments, the out-of-field radiation compensation array is determined and/or used for a portion of a measurement array. For example, where image processing using the method is only desired for a certain portion of the field of view and/or detector array. For example, if out-of-field radiation is expected to be according to a separable function or shape (e.g., dome shaped) but with a known deviation from this shape e.g., in some embodiments, the region of deviation is not corrected or is corrected using a different out-of-field radiation model.

Before explaining at least one embodiment of the invention in detail, it is to be understood that the invention is not necessarily limited in its application to the details of construction and the arrangement of the components and/or methods set forth in the following description and/or illustrated in the drawings and/or the Examples. The invention is capable of other embodiments or of being practiced or carried out in various ways.

### Exemplary system

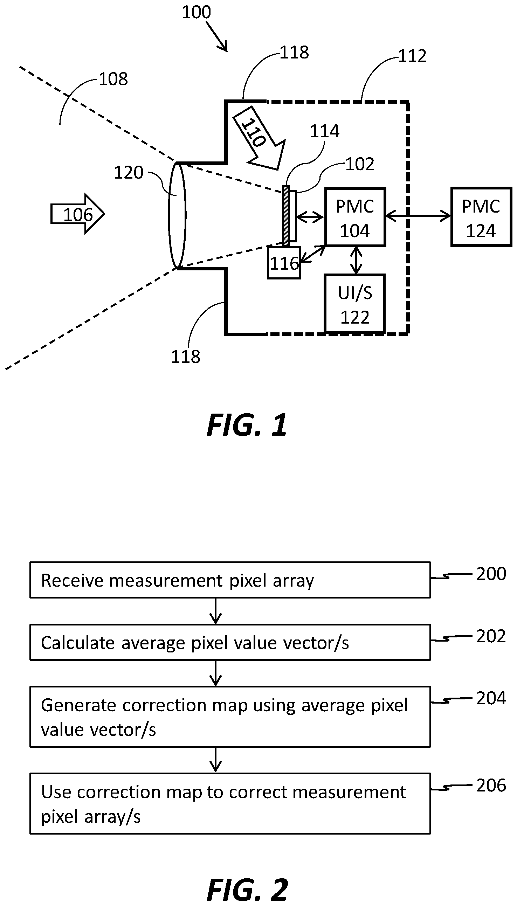

FIG. 1 is a simplified schematic of a camera **100**, according to some embodiments of the disclosure.

In some embodiments, camera **100** includes a detector array **102** e.g., a FPA (focal plane array). In some embodiments, camera **100** is an infrared (IR) camera where detector array **102** includes a plurality of IR detector elements. In some embodiments, detector array **102** provides measurement data (e.g., measurements from each detector of the array) to a processing and memory circuitry (PCM) **104**.

In some embodiments, detector array **102** receives and detects IR radiation **106** from a FOV **108**. In some embodiments, radiation **106** passes through one or more optical component **120** prior to arrival at detector array **102**.

In some embodiments, detector array **102** also receives out-of-field radiation IR radiation **110** e.g., which may originate from other source/s and/or regions than FOV **108**. For example, where camera **100** includes a housing **112** within which detector array **102** is located, in some embodiments, IR radiation **110** associated with housing and/or other element/s of the camera itself is received by detector array **102**.

In some embodiments, camera **100** includes an inner shutter **114**, where shutter **114**, when closed, blocks at least light **106** from FOV **108** from arriving to detector array **102**. In some embodiments, measurements acquired using detector array **102** while shutter **114** is closed (shutter closed e.g., by one or more actuator **116** controlled by PMC **104**) are used in image processing of the detector measurements of FOV **108** (e.g., when the shutter is closed. For example, in compensating for variation in sensing parameter/s between individual pixels of the detector array.

In in some embodiments, when shutter **114** is closed, for example, associated with the internal nature of shutter **114**, the shutter blocks infrared radiation from the field of view along with that emitted by internal portion/s of camera **100**. For example, blocking radiation from optic/s within the camera and/or portion/s **118** of housing **112** as indicated by solid lines (e.g., as opposed to dashed region/s).

In some embodiments, camera **100** is part of a system having one or more user interface (UI) **122** and/or one or more component external to camera **100** e.g., an external PMC **124** and/or UI (not illustrated). Where UI/s in some embodiments, are used to display data e.g., images corrected according to image processing method/s described within this document and/or to receive instruction/s from a user.

Optionally, in some embodiments, camera **100** includes one or more temperature sensor (not illustrated). Where, in some embodiments, the temperature sensor/s provide temperature measurements to PMC **124**.

### Exemplary method

FIG. 2 is a flow chart of a method of image processing, according to some embodiments of the disclosure.

At **200**, in some embodiments, data is received from a detector array (e.g., detector array **102** FIG. 1). Where the array includes a plurality of elements, each having a value associated with a detector of a detector array e.g. detector array **102** FIG. 1. In some embodiments, the data includes a measurement pixel array, which may include a measurement value (also herein termed "pixel value") corresponding to each detector of the detector array.

In some embodiments, a single image corresponding to a single acquisition time period is used. Alternatively, in some embodiments, a plurality of images are used (e.g., where the images are averaged).

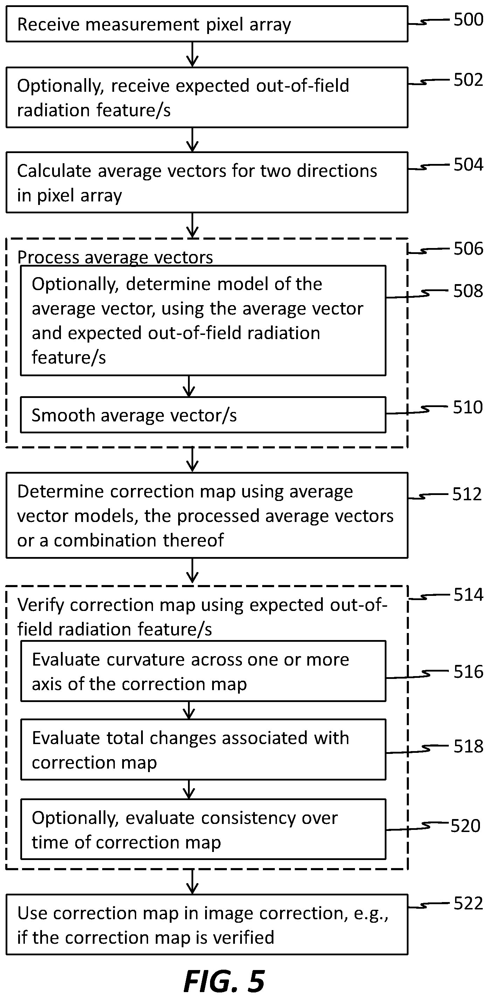

At **202**, in some embodiments, average pixel value vectors for two directions in the pixel array are determined. For example, according to one or more feature of step **504** FIG. 5.

At **204**, in some embodiments, a correction map is determined using the average pixel value vector/s. For example, according to one or more feature of one or more of steps **506-512** FIG. 5.

At **206,** in some embodiments, the correction map is used to correct one or more measurement pixel array/s. For example, by subtracting the correction map from (or adding the correction map to) the acquired image:

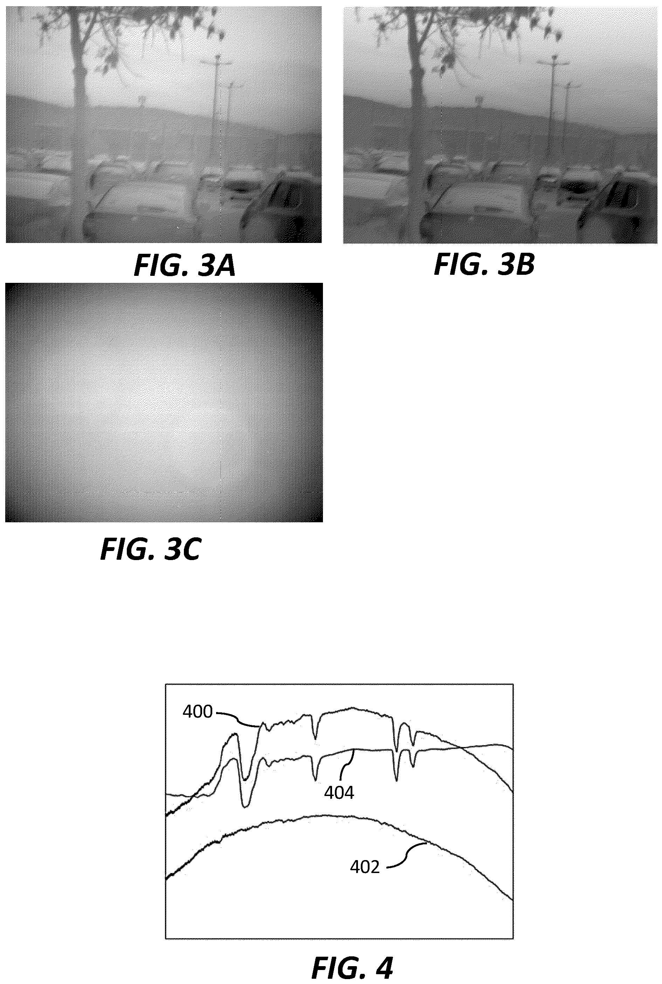

FIG. 3A is an illustration of an exemplary measurement pixel array, according to some embodiments of the disclosure.

FIG. 3B is an illustration of an exemplary corrected measurement pixel array, according to some embodiments of the disclosure.

FIG. 3C is an illustration of an exemplary correction array, according to some embodiments of the disclosure.

Referring back to step **206** FIG. 2, for example, in some embodiments, a correction map e.g., illustrated in FIG. 3C is subtracted from an image e.g., image FIG. 3A to provide a corrected image e.g., FIG. 3B.

FIG. 4 is a plot of exemplary data, according to some embodiments of the disclosure.

FIG. 4, in some embodiments, illustrates a central row of data from each of FIGs. 3A-C. Where plot **400** corresponds a row of image data acquired prior to correction (FIG. 4A), plot **402** is of a corresponding row in a correction array (FIG. 3C), and plot **404** is of a corresponding row in a corrected image (FIG. 3B) produced e.g., by subtracting the correction array from the image data (or, for example, where the dome shape is an inverted dome e.g., where higher intensity produces lower numbers, in some embodiments, the correction array is added to the image data). Alternatively, in some embodiments, the correction array is always subtracted from the image data, as where the dome shape is inverted dome, in some embodiments, the correction vector also has an inverted dome shape.

FIG. 5 is a flow chart of an image processing method, according to some embodiments of the disclosure.

At **500**, in some embodiments, a measurement pixel array is received **x**, which is, in some embodiments, an $m \times n$ matrix (m rows and n columns). Where the receiving, for example, includes one or more feature of step **200** FIG. 2.

$$x = \begin{bmatrix} x_{11} & x_{12} & \cdots & x_{1n} \\ x_{21} & x_{22} & \cdots & x_{2n} \\ \vdots & \vdots & \vdots & \vdots \\ x_{m1} & x_{m2} & \cdots & x_{mn} \end{bmatrix} \qquad \textit{Equation 1}$$

At **502**, in some embodiments, expected out-of-field radiation feature/s for are received. For example, a model of the expected out-of-field radiation feature/s.

In some embodiments, the out-of-field radiation is expected to have higher intensity at edges of the detector array, for example, the expected out-of-field radiation having a dome shape. In some embodiments, the dome shape is modeled as having a parabolic function in two perpendicular directions e.g., across the detector array. In some embodiments, for example, where higher intensity produces lower values in the measurement array, the dome shape is modeled as having a downwards opening parabolic function e.g., in two perpendicular directions.. In some embodiments, for example, where higher intensity produces higher values in the measurement array, the dome shape is modeled as having an upwards opening parabolic function e.g., in two perpendicular directions. Although both downwards opening and upwards opening parabolic dome shapes may be corrected for using the method/s herein-described, description in this document is generally with respect to downwards opening parabolic functions.

In some embodiments, one or more portion of the array is expected to deviate from this dome shape. For example, the deviation associated with known hot and/or cold spots e.g., within the camera.

At **504**, in some embodiments, average vectors for two directions in the measurement pixel array are calculated. Where, in some embodiments, the directions are aligned with direction of the columns and rows of the pixel array, the average vectors being an average row vector and an average column vector. in some embodiments, row **r** (a row vector with $m$ elements) and column **c** (a column vector with $n$ elements) average vectors are calculated.

Each component of the average row vector (where the average row vector **r**, itself, is a column vector), for example, being an average value of corresponding components of a plurality of rows (e.g., all of the rows) of the measurement pixel array e.g., the average row vector being determined according to Equations 2 and 3 hereinbelow.

Each component of the average column vector (where the average column vector **c**, itself, is a row vector), for example, being an average value of corresponding components of a plurality of columns (e.g., all of the columns) of the measurement pixel array, e.g., the average column vector being determined according to Equations 4 and 5 hereinbelow.

$$r = \begin{bmatrix} r_1 \\ r_2 \\ \vdots \\ r_m \end{bmatrix} \qquad \textit{Equation 2}$$

$$r_i = \frac{x_{i1} + x_{i2} + \dots + x_{in}}{n} = \frac{\sum_{a=1}^{n} x_{ia}}{n} \qquad \textit{Equation 3}$$

$$\boldsymbol{c} = \begin{bmatrix} c_1 & c_2 & \dots & c_n \end{bmatrix} \qquad \textit{Equation 4}$$

$$c_j = \frac{x_{1j} + x_{2j} + \dots + x_{mj}}{m} = \frac{\sum_{b=1}^{m} x_{bj}}{m} \qquad \textit{Equation 5}$$

In some embodiments, average vectors are at a different angle with respect to the detector array. The average vectors, for example, being calculated by rotating the measurement array by an angle, and then determining row and column average vectors. Where, in some embodiments, a rotation process may include a change in size of the measurement array e.g., truncation thereof. At **506**, in some embodiments, the average vectors are processed, the processing including feature/s of one or more of steps **508** and **510**.

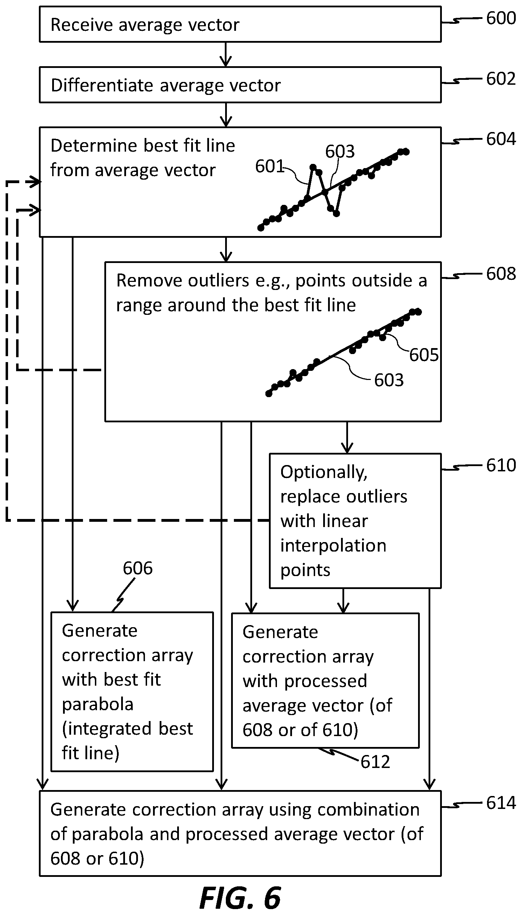

At **508**, optionally, in some embodiments, a model of one or both of the average vectors is generated using the average vector and expected out-of-field radiation feature/s received at step **502**. In an exemplary embodiment the model includes, for one or two perpendicular directions across the detector array, parabolic functions. Where the generating includes, for example, one or more feature of step/s **602**, and **604** FIG. 6.

At **510,** in some embodiments, one or both of the average vectors are smoothed. For example, by identifying and then removing or adjusting outlier elements of the vector/s.

In some embodiments, smoothing includes identifying and removing outlier values. Where, in some embodiments, the average vector is differentiated or double differentiated, values over a threshold being identified as outliers. In some embodiments, the threshold value/s used are constant. In some embodiments, the threshold is determined as a function of variance of the average vector. In some embodiments, the threshold is determined using a dynamic range of the image. In some embodiments, the threshold is set to designate a selected percentage of the average vector values as outlier values (the number of values above the threshold value is the selected percentage of values).

Additionally or alternatively, in some embodiments, smoothing includes low pass filtering. For example, where the filtering includes calculating a moving average along the vector **V**, for example, of a number of surrounding vector elements, e.g., of 1-10 elements, or 3 elements, or 5 elements, where, for example, for 5 elements, in some embodiment an element $V_s(i)$ of a smoothed/low-pass filtered vector $\mathbf{V_s}$ is determined as:

$$V_s(\text{i}) = \frac{v(i-2) + v(i-1) + \dots + v(i+2)}{5} \qquad \textit{Equation 6}$$

Although *Equation 6* uses surrounding values on both sides of the element being determined, in some embodiments, one or more value is used on one side or unequal numbers of elements on different sides are used.

In some embodiments, outliers are identified by comparison of the average vector to the model (e.g., parabolic function e.g., according to step/s **604**, **606** FIG. 6), where, for example, those components varying by over a threshold from the model are designated outliers.

At **512**, in some embodiments, a correction map is determined using the average vector models, the average vectors without outliers, or a combination thereof e.g., according to one of steps **606**, **612**, and **614** of FIG. 6.

Where, to produce a correction map from a row vector and a column vector, each element of the correction map is a sum of a corresponding row vector value and a corresponding column vector value. Where the row and column vectors are, e.g., the smoothed average row vector and smoothed average column vector e.g., the row parabolic function and the column parabolic function.

At **514**, in some embodiments, the correction map is verified. For example, the verification including evaluating one or more feature e.g., according to one or more of steps **516**, **518**, **520**. In some embodiments, the verification includes giving the compensation array a score e.g., for each verification step employed.

At **516**, in some embodiments, curvature across one or more axis of the correction map is evaluated. For example, by evaluating curvatures of the row and column vectors used to generate the correction map (e.g., the smoothed row average vector and smoothed column vector and/or the row and column parabolic functions).

In some embodiments, the evaluation includes verifying that the curvature is within an expected range, where this expected range, in some embodiments, is received at step **502**. In an exemplary embodiment, the curvature is verified if it is under a threshold level in both directions (e.g., for both the rows and columns). In some embodiments, the curvature is given a score e.g., where values closer to a desired value or range receive higher scores, and/or where values further away from the desired value or range receive lower scores, scores between the two e.g., being a function (e.g., linear) of the distance between the curvature and the desired value or range.

In some embodiments, the evaluation includes verifying that the X-axis curvature is similar to that of the Y-axis. For example, where the difference between the curvatures is verified if it is below a threshold value (which is e.g., received at step **502**). In some embodiments, the similarity of the curvatures in two directions is given a score. The score, for example, based on the similarity, with larger differences having lower scores.

In some embodiments, a single score is generated based on more than one input score e.g., based on the curvature level score and the similarity of curvature score. In some embodiments, the single score is generated as an average or a weighted average of the scores. In some embodiments, the single score is generated using fuzzy logic functions for example, using a spline-based Z-shaped membership function e.g., implemented using zmf function in MATLAB®.

At **518**, in some embodiments, changes associated with the correction map are evaluated. Where, for example, in some embodiments for one or more portion of the map, a sum of values of the map is evaluated. In some embodiments, the map is verified if the sum/s are below a threshold. In some embodiments, total changes associated with the correction map e.g., in its entirety are evaluated.

At **520**, in some embodiments, the verification includes evaluating consistency over time of correction map. For example, in some embodiments, the verification includes comparing the compensation array with one or more other compensation arrays. For example, previously generated compensation array/s e.g., generated during a current imaging session and/or generated for the same camera. For example, where one or more previously generated compensation array are retrieved from a memory. In an exemplary embodiment, the compensation array is verified if it has a same polarity as the previously generated compensation array/s.

In some embodiments, one or more of verification steps **516**, **518**, and **520** include generating a score for the correction array.

In some embodiments, an overall score is determined and evaluated. Where the overall score, in some embodiments, is a sum of scores of different steps of the verification process (e.g., sum of scores associated with two or more of steps **516**, **518**, **520**).

In some embodiments, if the overall score is within a given score range or over a threshold, the correction array is saved in a memory and/or used to correct acquired images (e.g., at PMC **104** FIG. 1). In some embodiments, the score range/threshold is fixed e.g., received at step **502**. Alternatively, in some embodiments, the score range is adaptive, for example, adjusted based on one or more parameter. For example, one or more feature of the image/s used to generate the correction array e.g., a dynamic range of the image, and/or an estimated out-of-field radiation in the image. For example, the score range/threshold being adjusted based on a number of previous corrections, for example, a number of previously determined correction arrays. For example, the score range being adjusted based on temperature e.g., inside and/or outside the camera e.g., as measured by one or more sensor. For example, the score range being adjusted based on a number of previous corrections and temperature.

Optionally, in some embodiments, prior to being used to correct acquired images, the correction array is multiplied by an attenuation factor. A potential benefit of which is prevention of over-adjustment of the image.

Optionally, in some embodiments, the correction array is re-generated e.g., where steps **500-520** are repeated. In some embodiments, the regeneration is periodic, e.g., repeated at regular intervals. Alternatively or additionally, in some embodiments, regenerating is performed based on one or more input. For example, where changes in the camera operation are identified e.g., temperature change/s e.g., a temperature of the FPA. For example, where image degradation is identified from the corrected images. For example, upon a user instruction (e.g., received through UI **122** FIG. 1).

Optionally, in some embodiments, other known out-of-field radiation profile/s are combined with the correction array.

At **522**, in some embodiments, the correction map is used in image correction e.g., according to one or more features of step **206** FIG. 2.

In some embodiments, a portion of the correction map is used, e.g., a predefined portion, $0 \leq pD \leq 1$, of correction map D from image X, e.g., according to:

$$X_{corrected} = X - pD \cdot D \qquad Equation \qquad 7$$

FIG. 6 is a flow chart of a processing method, according to some embodiments of the disclosure.

At **600**, in some embodiments, an average vector is received. For example, an average vector as calculated in step **504** FIG. 5 e.g., one or both of a row average vector r and a column average vector **c**.

At **602**, in some embodiments, the average vector is differentiated to provide a differentiated average vector **601**.

A differential vector **601** being determined as, for example, referring to the row average vector **r** elements, column average vector **c**, and corresponding elements of differential row vector **dr** and differential column vector **dc**, for example, according to:

$$dr_i = r_i - r_{i-1}, \quad i = 2 \ldots m, \quad dr_1 = dr_2 \qquad Equations\ 8$$

$$dc_j = c_j - c_{j-1}, \quad j = 2 \ldots n, \quad dc_1 = dc_2 \qquad Equations\ 9$$

At **604**, a best-fit line **603** to the average vector differential is determined e.g., a best-fit line for each average vector differential. Where, in some embodiments, the best-fit line is representative of the model of the out-of-field radiation, adjusted using the average vector e.g., the model being a parabolic function (which is linear in differential space.)

In an exemplary embodiment, best fit parabolas for each of the row average vector **r** and the column average vector c are determined.

In some embodiments, for example, alternatively or additionally to steps **602-604**, the average vector is double differentiated to provide a double differentiated average vector, where the best fit line is a constant.

In some embodiments, best fit line/s **bdr** (best fit line to the differential row vector **dr**) and **bdc** (best fit line to differential column vector **dc**), are determined using a polynomial regression method. For example, according to the following:

$$bdr_i = \alpha r + \beta r \cdot i, \begin{pmatrix} \alpha r \\ \beta r \end{pmatrix} = \begin{pmatrix} m & \Sigma i \\ \Sigma i & \Sigma i^2 \end{pmatrix}^{-1} \cdot \begin{pmatrix} \Sigma dr_i \\ \Sigma i \cdot dr_i \end{pmatrix} \quad Equation\ 10$$

$$bdc_j = \alpha c + \beta c \cdot j, \begin{pmatrix} \alpha c \\ \beta c \end{pmatrix} = \begin{pmatrix} n & \Sigma j \\ \Sigma j & \Sigma j^2 \end{pmatrix}^{-1} \cdot \begin{pmatrix} \Sigma dc_j \\ \Sigma j \cdot dc_j \end{pmatrix} \quad Equation\ 11$$

At **606**, in some embodiments, a correction array **D1** is generated using the best fit parabola/s.

Where the row best-fit line **bdr** is integrated to provide a row vector **r'** parabola and the column best-fit line **bdc** is integrated to provide a column vector parabola **c'**.

$$\mathbf{D1} = \begin{bmatrix} r_1 + c'_1 & r'_1 + c'_2 & \cdots & r'_1 + c'_n \\ r'_2 + c'_1 & \cdots & \cdots & \vdots \\ \vdots & \vdots & \vdots & \vdots \\ r'_m + c'_1 & \cdots & \cdots & r'_m + c'_n \end{bmatrix} \qquad Equation\ 12$$

$$D1_{ab} = r'_a + c'_b \qquad\qquad Equation\ 13$$

At **608**, in some embodiments, outliers are identified and removed from the average vector/s e.g., where outliers are identified as differentiated average vector element values outside a range around the associated best-fit line, in differential space e.g., where outliers are identified as double differentiated average vector element values outside a range around a constant best-fit line, in double differential space.

In some embodiments, the outliers are identified as points outside a range around the parabolic function.

For example, where outliers, in some embodiments, are defined as those elements in the difference vector ($dr_i$, $dc_j$) with a difference from the corresponding best-fit line ($bdr_i$, $bdr_j$) of greater than a threshold (thr, thc), e.g., a pre-defined threshold. In some embodiments, the threshold is determined using (or a pre-defined threshold is adjusted based on) a dynamic range of an image e.g., the image used to generate the average row and column vectors.

Where, for example, row best fit line threshold *thr* and column best fit line threshold *thc* are used to determine row outlier element/s *io* and column outlier element/s *jo* according to:

$$io = \{i\ such\ as\ |dr_i - bdr_i| > thr\} \qquad Equation\ 14$$

$$jo = \{j\ such\ as\ |dc_j - bdc_{ji}| > thc\} \qquad Equation\ 15$$

Where removal of outliers provides, for example, after integration of the adjusted/smoothed differential vectors $dr_i$, $dc_j$, a smoothed row average vector **sr** and/or a smoothed column average vector **sc**.

At **610**, optionally, in some embodiments, the smoothed average vectors **sr**, **sc** are further processed by replacing (or adjusting) outlier values *io, jo.*

For example, with the corresponding values of the best-fit line, e.g., according to:

$$dr_i = \begin{cases} dr_i & i \notin io \\ bdr_i & i \in io \end{cases} \qquad Equation\ 16$$

$$dc_j = \begin{cases} dc_j & j \notin jo \\ bdc_j & j \in jo \end{cases} \qquad Equation\ 17$$

For example, with interpolation (e.g., linear interpolation) between non-outlier points of the differentiated average vector.

In some embodiments, both the best-fit line and interpolation are used. For example, where one or more outlier element is replaced by a weighted sum of a corresponding element of the best-fit line and element determined using interpretation.

At **612**, in some embodiments, a correction array **D2** is generated using the smoothed/adjusted average differential vectors, which are integrated to provide smoothed/adjusted average sr, sc e.g., using predefined constants, pr and pc, both in range [0,1] and according to:

$$sr_i = \sum_{x=1}^{i}(pr \cdot dr_x + (1 - pr) \cdot bdr_x) \qquad Equation\ 18$$

$$sc_j = \sum_{x=1}^{j}(pc \cdot dc_x + (1 - pc) \cdot bdc_x) \qquad Equation\ 19$$

Where, for example, correction array **D2** with the new smoothed vectors sr, sc is determined according to:

$$\mathbf{D2} = \begin{bmatrix} sr_1 + sc_1 & sr_1 + sc_2 & \cdots & sr_1 + sc_n \\ sr_2 + sc_1 & \cdots & \cdots & \vdots \\ \vdots & \vdots & \vdots & \vdots \\ sr_m + sc_1 & \cdots & \cdots & sr_m + sc_n \end{bmatrix} \qquad Equation\ 20$$

$$D2_{ij} = sr_i + sc_j \qquad Equation\ 21$$

At **614**, in some embodiments, a correction array **D** is generated using both the parabolas and the smoothed average vector, e.g., according to the relationship of Equation 10:

$$\mathbf{D} = e\mathbf{D1} + f\mathbf{D2} \qquad Equation\ 22$$

Where e and f are weighting values.

In some embodiments, the weights are determined using an iterative process (e.g., trial and error) where, for example, those weights which provide high scoring of the compensation array (e.g., scoring as described elsewhere in this document) are used. In some embodiments, e.g., alternatively or additionally to using trial and error, weights are determined using temperature characteristics and/or measurements e.g., internal and/or external to the camera, and/or optical feature/s of the camera acquiring the images.

Optionally, in some embodiments, the process is an iterative process whereby, after outliers are removed (and optionally replaced), the parabolic function/s are re-determined e.g., as illustrated by dashed lines in FIG. 6. In some embodiments, the iteration is performed once. For example, where outliers are removed/replaced, the best fit line is redetermined, and then this second best fit line is used. For example, the second best fit line being used to determine the correction map at step **606**. For example, the second best fit line being used to process the average vectors (e.g., further process them). In some embodiments, the iteration is performed more than once.

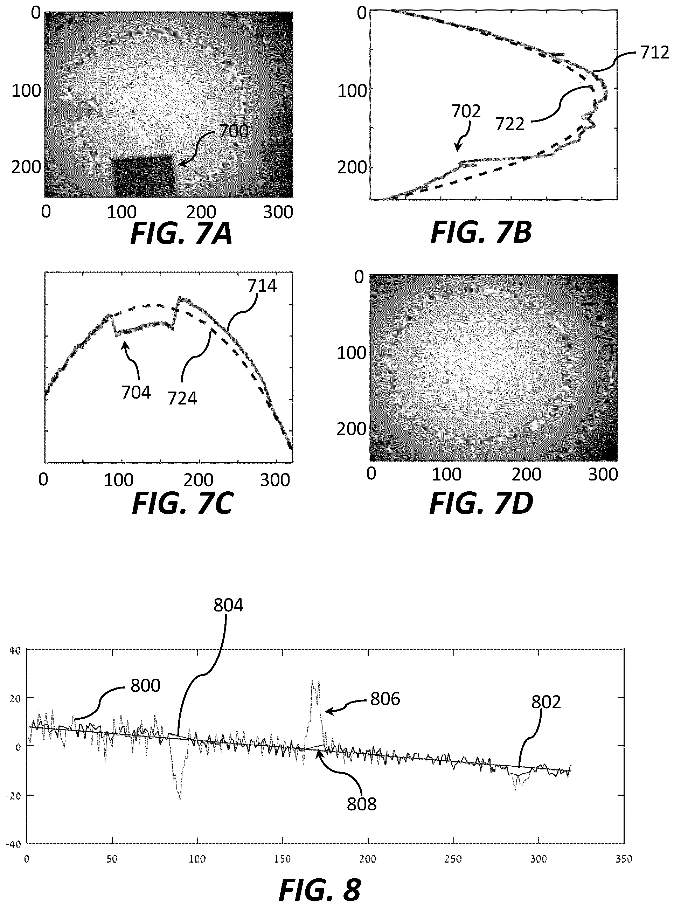

FIG. 7A is an illustration of an exemplary measurement pixel array, according to some embodiments of the disclosure.

Where the exemplary measurement pixel array, or image, has a darker region **700** of the image (e.g., corresponding to a darker region of the ROI).

FIGs. 7B-C are plots of exemplary average vectors **712**, **714**, according to some embodiments of the disclosure.

Where, in some embodiments, average vectors **712**, **714** are plotted with solid lines, and dashed lines illustrate parabolic functions **722**, **724** determined using the average vectors **712**, **714** respectively.

FIG. 7B, where the x-axis is intensity and the y-axis is the row number, in some embodiments, illustrates a row average vector **712** determined from the image of FIG. 7A.

FIG. 7C, where the x-axis is a column number and the y-axis is intensity, in some embodiments, illustrates a column average vector **714** determined from the image of FIG. 7A.

Where dark region **700** is visible as outlier values **702** in FIG. 7B and outlier values **704** in FIG. 7C.

FIG. 7D is an illustration of an exemplary correction array, according to some embodiments of the disclosure.

Where, in some embodiments, the correction array is generated according to method/s described within this document e.g., using average vectors of FIGs. 7B-C.

FIG. 8 is a plot of a differentiated average vector **800**, a best-fit line **802**, and a smoothed average vector **804**, according to some embodiments of the disclosure.

A plot **800** (also herein termed differentiated average vector **800**) of a differential of the average columns vector **714** plotted at FIG. 7C. FIG. 8 also illustrates a best-fit line **802** and a smoothed average vector **804** where outlier values, e.g., values **806**, have been replaced with linear interpolation values e.g., values of **808** corresponding to outlier values **806**.

**General**

As used within this document, the term "about" refers to $\pm 20\%$

The terms "comprises", "comprising", "includes", "including", "having" and their conjugates mean "including but not limited to".

The term "consisting of" means "including and limited to".

As used herein, singular forms, for example, "a", "an" and "the" include plural references unless the context clearly dictates otherwise.

Within this application, various quantifications and/or expressions may include use of ranges. Range format should not be construed as an inflexible limitation on the scope of the present disclosure. Accordingly, descriptions including ranges should be considered to have specifically disclosed all the possible subranges as well as individual numerical values within that range. For example, description of a range such as from 1 to 6 should be considered to have specifically disclosed subranges such as from 1 to 3, from 1 to 4, from 1 to 5, from 2 to 4, from 2 to 6, from 3 to 6 etc., as well as individual numbers within the stated range and/or subrange, for example, 1, 2, 3, 4, 5, and 6. Whenever a numerical range is indicated within this document, it is meant to include any cited numeral (fractional or integral) within the indicated range.

It is appreciated that certain features which are (e.g., for clarity) described in the context of separate embodiments, may also be provided in combination in a single embodiment. Where various features of the present disclosure, which are (e.g., for brevity) described in a context of a single embodiment, may also be provided separately or in any suitable sub-combination or may be suitable for use with any other described embodiment. Features described in the context of various embodiments are not to be considered essential features of those embodiments, unless the embodiment is inoperative without those elements.

Although the present disclosure has been described in conjunction with specific embodiments thereof, it is evident that many alternatives, modifications, and variations will be apparent to those skilled in the art. Accordingly, this application intends to embrace all such alternatives, modifications and variations that fall within the spirit and broad scope of the appended claims.

All references (e.g., publications, patents, patent applications) mentioned in this specification are herein incorporated in their entirety by reference into the specification, e.g., as if each individual publication, patent, or patent application was individually indicated to be incorporated herein by reference. Citation or identification of any reference in this application should not be construed as an admission that such reference is available as prior art to the present disclosure. In addition, any priority document(s) and/or documents related to this application (e.g., co-filed) are hereby incorporated herein by reference in its/their entirety.

Where section headings are used in this document, they should not be interpreted as necessarily limiting.

**Claims**

1. An infrared image processing method comprising:

   receiving an image frame comprising a measurement array **X** of pixel values from a detector array of an infrared camera;
calculating, from said measurement array:

a row average vector **r** where calculating each element $r_i$ of said row average vector comprises averaging corresponding elements of rows of said measurement pixel array;
a column average vector **c** where calculating each element $c_j$ of said column average vector comprises averaging corresponding elements of columns of said measurement pixel array;

generating a correction array **D** by, for each element $D_{ij}$ of said correction array, summing a corresponding row average vector element $r_i$ and a corresponding column average vector element $c_j$; and
applying said correction array **D** to said measurement array **X** to provide a corrected measurement array.

2. The method according to claim 1,

wherein said calculating comprises calculating elements $r_i$ of said row average vector r according to:

$$r_i = \frac{\sum_{a=1}^{n}(x_{ia})}{n};$$

and
wherein said calculating comprises calculating elements $c_j$ of said column average vector c according to:

$$c_j = \frac{\sum_{b=1}^{m}(x_{bj})}{m}$$

wherein said measurement pixel array **X** is an m x n array; and
wherein generating said correction array **D** comprises calculating each element $D_{ij}$ of the correction array **D** according to the relationship:

$$D_{ij} = r_i + c_j.$$

3. The method according to any one of claims 1-2, wherein said generating comprises, prior to said summing, adjusting one or both of said row average vector and said column average vector.

4. The method according to claim 3, wherein said adjusting comprises smoothing one or both of said row average vector and said column average vector.

5. The method according to claim 3, comprising:

differentiating one or more average vector selected from said row average vector and said column average vector to provide one or more corresponding differentiated average vector;
determining one or more best fit line to said one or more differentiated average vector; and
integrating said one or more best fit line to produce one or more best fit parabolic functions (a row best fit parabolic function **fr** and/or a column best fit parabolic function **fc**) corresponding to said one or more average vector selected from said row average vector and said column average vector
wherein said adjusting comprises using said one or more best fit parabolic functions to smooth the corresponding average vector.

6. The method according to claim 5, wherein one or more of:

said adjusting said row average vector comprises replacing at least one element of said row average vector with a value of a corresponding element of said row best fit parabolic function; and
said adjusting said column average vector comprises replacing at least one element of said column average vector with a value of a corresponding element of said column best fit parabolic function.

7. The method according to any one of claims 3-6, wherein said adjusting comprises:

identifying outlier elements in one or both of said row average vector and said column average vector, where, for one or both of said row and said column average vectors, said identifying comprises one or more of:

identifying elements of a corresponding double differentiated average vector element which are outside of a threshold value and/or range;
designating a proportion of elements having the most extreme values as outlier elements; and
designating those average vector elements varying, in a differential domain, by over a threshold value from a corresponding differential domain parabolic function;

adjusting said outlier elements, where said adjusting comprises one or more of:

setting values of said outlier elements to zero;
replacing said outlier elements values with values produced by interpolation between non-outlier elements of the corresponding average vector in the differential domain;
replacing said outlier elements with corresponding values of the corresponding opening parabolic function; and
replacing said outlier elements with a weighted sum of a corresponding opening parabolic function value and a value determined using interpolation between the non-outlier elements of said average vector in a differential domain.

8. The method according to any one of claims 1-7, wherein said calculating comprises rotating said measurement array of pixel values, said row average vector and said column average vector being averages of elements of said measurement array in two perpendicular directions across said measurement array, the directions associated with an angle of said rotating.

9. The method according to any one of claims 3-8, wherein one or more of:

said adjusting produces an adjusted row vector **r'** and an adjusted column vector **c'**, wherein said generating said correction array comprises generating a first correction array **D1**, using said adjusted column **c'** and row **r'** vectors, wherein said generating comprises calculating each element $D1_{ij}$ of the array **D1** according to the relationship: $D1_{ij} = c'_j + r'_i$; and
said generating said correction array comprises generating a second correction array **D2** using said row and said column best fit opening parabolic functions **fr**, **fc**, and calculating each element $D2_{ij}$ of the array **D2** according to the relationship: $D2_{ij} = fc_j + fr_i$; and
said generating said correction array comprises using a weighted combination of said first correction array **D1** and said second correction array **D2**.

10. The method according to any one of claims 1-9, comprising verifying said correction array, the verifying comprising one or more of:

verifying curvature across the correction array in one or more direction;
comprises verifying a difference between curvature of said correction array in the row direction and the column direction;
determining a curvature score;
determining a difference in curvature score;
comparing said correction array with one or more previous correction arrays received; and
determining a consistency score for difference between said correction array and said one or more previous correction arrays, said consistency score based on consistency of polarity of said correction array.

11. The method according to any one of claims 1-10, wherein said applying comprises subtracting said correction array from said measurement array to provide a corrected measurement array.

12. The method according to any one of claims 1-11, wherein said receiving comprises receiving more than one measurement array and averaging said more than one measurement array to provide said measurement array **X**.

13. The method according to any one of claims 1-12, wherein said applying comprises applying said correction array to a plurality of sequentially received measurement arrays.

14. The method according to claim 13, comprising re-determining said correction array to provide a re-determined array and applying said re-determined array to subsequently received measurement arrays.

15. A detector system comprising:

a detector array comprising a plurality of detectors, which detector array configured to provide image frames each image frame including a measurement array $X$ of pixel values, each pixel value provided by a detector of said plurality of detectors;
a processor configured to:

receive said measurement array from said detector array;
calculate, from said measurement array:

a row average vector $r$ where, for each element of said row average vector, averaging corresponding elements of rows of said measurement pixel array; and
a column average vector $c$ where, for each element of said column average vector, averaging corresponding elements of columns of said measurement pixel array;

generate a correction array $D$ by, for each element of said correction array, summing a corresponding row average vector element and a corresponding column average vector element; and
apply said correction array to said measurement array or a plurality of sequentially received measurement arrays.

**FIG. 1**

| | |
|---|---|
| Receive measurement pixel array | 200 |
| Calculate average pixel value vector/s | 202 |
| Generate correction map using average pixel value vector/s | 204 |
| Use correction map to correct measurement pixel array/s | 206 |

**FIG. 2**

**FIG. 3A**

**FIG. 3B**

**FIG. 3C**

**FIG. 4**

Receive measurement pixel array — 500

Optionally, receive expected out-of-field radiation feature/s — 502

Calculate average vectors for two directions in pixel array — 504

Process average vectors — 506

Optionally, determine model of the average vector, using the average vector and expected out-of-field radiation feature/s — 508

Smooth average vector/s — 510

Determine correction map using average vector models, the processed average vectors or a combination thereof — 512

Verify correction map using expected out-of-field radiation feature/s — 514

Evaluate curvature across one or more axis of the correction map — 516

Evaluate total changes associated with correction map — 518

Optionally, evaluate consistency over time of correction map — 520

Use correction map in image correction, e.g., if the correction map is verified — 522

*FIG. 5*

FIG. 6

FIG. 7A

FIG. 7B

FIG. 7C

FIG. 7D

FIG. 8

Europäisches
Patentamt

European
Patent Office

Office européen
des brevets

# EUROPEAN SEARCH REPORT

**Application Number**

EP 25 16 7033

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2013/250125 A1 (GARROW STANLEY H [US] ET AL) 26 September 2013 (2013-09-26) | 1-4,7-9, 11-15 | INV. H04N25/677 |
| Y | * paragraphs [0106] - [0112], [0138] - [0157], [0233] - [0243]; figures 1, 5, 8,13A, 13B, 13C, 17-19 * | 5,6,10 | |
| | ----- | | |
| X | US 2014/016879 A1 (HOEGASTEN NICHOLAS [US] ET AL) 16 January 2014 (2014-01-16) | 1-4,7-9, 11-15 | |
| Y | * paragraphs [0092] - [0118]; figures 5, 8, 15A, 18A, 18B * | 5,6,10 | |
| | ----- | | |
| X | ZHENWANG LIU ET AL: "A Fixed-Pattern Noise Correction Method Based on Gray Value Compensation for TDI CMOS Image Sensor", SENSORS, vol. 15, no. 9, 16 September 2015 (2015-09-16), pages 23496-23513, XP055464043, DOI: 10.3390/s150923496 | 1-3,15 | |
| Y | * abstract, section 3; figures 1, 5, 9, 10 * | 5,6,10 | TECHNICAL FIELDS SEARCHED (IPC) H04N |
| | ----- | | |

The present search report has been drawn up for all claims

| Place of search | Date of completion of the search | Examiner |
|---|---|---|
| Munich | 4 June 2025 | Trimeche, Mejdi |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 4 626 015 A1

## ANNEX TO THE EUROPEAN SEARCH REPORT
## ON EUROPEAN PATENT APPLICATION NO.

EP 25 16 7033

This annex lists the patent family members relating to the patent documents cited in the above-mentioned European search report.
The members are as contained in the European Patent Office EDP file on
The European Patent Office is in no way liable for these particulars which are merely given for the purpose of information.

04-06-2025

| Patent document cited in search report | Publication date | Patent family member(s) | Publication date |
|---|---|---|---|
| US 2013250125 A1 | 26-09-2013 | NONE | |
| US 2014016879 A1 | 16-01-2014 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 9491376 B
- US 8373757 B
- US 9723227 B
- US 10986288 B

- US 10393575 B
- US 9930324 B
- US 20200154063 A

**Non-patent literature cited in the description**

- **GERSHON, G. et al.** *LOW SWaP MWIR DETECTOR AND VIDEO CORE*, www.scd.co.il